# EUROPÄISCHE PATENTANMELDUNG

(11) **EP 1 457 393 A1**
(43) Veröffentlichungstag der Anmeldung: **15.09.2004**
(21) Anmeldenummer: 03027216.5
(22) Anmeldetag: 28.11.2003
(51) Int. Cl.: B60R 21/34, B62D 25/12, B62D 25/16

(54) **Personenkraftwagen mit Fussgängerschutz**

(30) Priorität: 14.03.2003 DE 10311221
(71) Anmelder: Benteler Automobiltechnik GmbH, 33104 Paderborn (DE)
(72) Erfinder: Holtschulte, Katja, 33161 Hövelhof (DE); Nolze, Hans-Patrick, 33129 Delbrück (DE); Antes, Dirk, 66265 Heusweiler (DE); Korinth, Hendrick, 33106 Paderborn (DE); Fischer, Jochen, 73760 Ostfildern (DE); Hilgenberg, Stefan, 33102 Paderborn (DE); Juarez-Perez, Ricardo, 33098 Paderborn (DE); Hoffmann, Jörg, 66636 Theley (DE); Rüther, Harald, 59939 Olsberg (DE)
(74) Vertreter: Griepenstroh, Jörg

(57) **Zusammenfassung**

Die Erfindung betrifft einen Personenkraftwagen mit gegenüber von oben und/oder vorne durch einen Aufprall eines ungeschützten Verkehrsteilnehmers einwirkenden Kräften nachgiebig gestalteten Karosseriefrontteilen mit einer Fronthaube (6), welche an ihrer Unterseite einem Antriebsaggregat zugewandte Deformationskörper aufweist und über ein ander Karosserie angeordnetes Haubenschloss verriegelbar ist, welches gegenüber von der Fronthaube (6) ausgehenden Anprallkräften nachgiebig gestaltet und/oder gelagert ist. Die Fronthaube (6) ist mit Scharniergelenken an der Karosserie gelagert, welche ebenfalls gegenüber von der Fronthaube (6) ausgehenden Anprallkräften nachgiebig gestaltet und/oder gelagert sind. Die Fronthaube (6) ist an seitlichen Kotflügeln (1) abgestützt, wobei die Kotflügel (1) im Bereich ihrer oberen Kotflügelkanten über Deformationskonsolen an den Kotflügelbänken abgestützt sind.

## Beschreibung

Die Erfindung betrifft einen Personenkraftwagen mit gegenüber von oben und/oder von vorne durch einen Aufprall eines ungeschützten Verkehrsteilnehmers einwirkenden Kräften nachgiebig gestalteten Karosseriefrontteilen.

Karosseriestrukturen eines Pkw-Vorderwagens sind unter dem Aspekt der passiven Sicherheit dahingehend ausgelegt, dass sie im Kollisionsfall mit einem motorisierten Verkehrsteilnehmer oder einem festen Hindernis einen großen Teil der Aufprallenergien durch Verformung aufnehmen, um auf diese Weise den verwindungssteif gestalteten Fahrgastraum zu schützen. Neben diesem primär auf den Insassenschutz bezogenen Aspekt der passiven Sicherheit spielt verstärkt die Sicherheit der ungeschützten, d.h. insbesondere der unmotorisierten Verkehrsteilnehmer wie Fußgänger und Radfahrer, eine zunehmende Rolle. Insbesondere bei der Kollision mit einem Fußgänger treten hohe Beschleunigungen im Bereich des Kopfes, des Oberkörpers und auch im Beinbereich auf. Passive Sicherheitsmaßnahmen kennzeichnen sich dadurch, dass kollisionsgefährdete Bereiche eines Pkw-Vorderwagens anprallweich gestaltet sind. Das heißt, Aufprallenergie wird durch die Karosseriefrontteile in Verformungsenergie umgewandelt, um auf diese Weise bei einem Anprall die Verletzungsschwere eines ungeschützten Verkehrsteilnehmers zu minimieren. Die zu tolerierende maximale Belastung für den Kopf liegt bei HIC (Head Injury Criterion) 1000, während des Aufschlags auf die Fronthaube. Für den Aufprall des Oberschenkels auf die vordere Haubenkante gelten maximale Belastungen von 500 N als resultierende Kraft und 300 Nm als Biegemoment. Nachteilig bei den bekannten Karosseriestrukturen eines Pkw-Vorderwagens ist, dass häufig nur einzelne Komponenten in einem gewissen Rahmen anprallweich gestaltet sind, während angrenzende Bauteile weniger nachgiebig gestaltet sind, so dass insgesamt betrachtet keine zufriedenstellende Lösung zur Gewährleistung der passiven Sicherheit gegeben ist.

Hiervon ausgehend liegt der Erfindung die Aufgabe zugrunde, einen Personenkraftwagen mit nachgiebig gestalteten Karosseriefrontteilen aufzuzeigen, wobei die passive Sicherheit ungeschützter Verkehrsteilnehmer bei einer Kollision mit dem Personenkraftwagen nicht nur punktuell, sondern im Rahmen eines Gesamtkonzepts deutlich erhöht ist.

Diese Aufgabe wird bei einem Personenkraftwagen mit den Merkmalen des Patentanspruchs 1 gelöst.

Der erfindungsgemäße Personenkraftwagen weist eine Reihe von auf die Karosseriestruktur eines Pkw-Vorderwagens bezogenen Merkmalen auf, die in ihrer Kombination wesentlich zur Reduzierung der Verletzungsschwere bei einem Anprall eines ungeschützten Verkehrsteilnehmers beitragen.

Zunächst sind Deformationskörper an der einem Antriebsaggregat zugewandten Unterseite der Fronthaube vorgesehen. Diese Deformationskörper dienen dazu, Aufprallenergie in Verformungsenergie umzuwandeln und auf diese Weise den begrenzten Freiraum zwischen der Fronthaube und dem Antriebsaggregat optimal zu nutzen. Die Deformationskörper können sich auf vordefinierte Auflagen der Karosserie und des Antriebsaggregats abstützen. Die Deformationskörper bestehen vorzugsweise aus Metall und sind ähnlich wie Federbleche aus der tragenden Unterstruktur der Fronthaube in Richtung der Antriebsaggregate bzw. der Karosserie ausgestellt.

Die zweite Merkmalsgruppe betrifft den Übergangsbereich zwischen der Fronthaube und der Fahrzeugkarosserie. Es ist vorgesehen, dass die Fronthaube über ein an der Karosserie angeordnetes Haubenschloss verriegelbar ist, welches gegenüber von der Fronthaube ausgehenden Anprallkräften nachgiebig gestaltet und/oder gelagert ist. Die nachgiebige Gestaltung des Haubenschlosses kann durch Sollbiegestellen innerhalb der Konstruktion des Haubenschlosses vorgesehen sein. Zusätzlich oder optional ist das Haubenschloss auf einem geeigneten Deformationssockel platziert, der derart konfiguriert ist, dass bei von der Fronthaube ausgehenden Anprallkräften einzelne Bereiche des Deformationssockels gezielt verformt werden und auf diese Weise bei einem anprallbedingten Absenken der Motorhaube Anprallenergie in Verformungsenergie umgewandelt wird.

Ferner ist vorgesehen, dass Scharniergelenke, mit denen die Fronthaube an der Karosserie gelagert ist, ebenfalls gegenüber von der Fronthaube ausgehenden Anprallkräften nachgiebig gestaltet und/oder gelagert sind. Hierbei können grundsätzlich die gleichen Deformationssockel zum Einsatz kommen wie bei den Haubenschloss. Die Scharniergelenke können beispielsweise Sollbiegestellen oder Sollbruchstellen aufweisen, um eine gezielte Verformung bei der anprallbedingten Absenkung der Motorhaube zu gewährleisten.

Als weiteres wesentliches Merkmal im Rahmen dieses Gesamtkonzepts werden Deformationskonsolen angesehen, die unterhalb der Kotflügelkanten der Kotflügel angeordnet sind. Deformationskonsolen sind wiederum an Kotflügelbänken abgestützt. Durch die Zwischenschaltung von Deformationskonsolen zwischen Kotflügel und Kotflügelbank wird gewährleistet, dass sich die oberen Kotflügelkanten ebenfalls anprallweich verhalten. Die obere Kotflügelkante ist aufgrund ihrer abgewinkelten Konfiguration und aufgrund der Tatsache, dass unterhalb der Kotflügelkante unmittelbar die Kotflügelbank verläuft, relativ starr und unnachgiebig, so dass es in diesem Bereich bei einem Kopfaufprall zu größeren Verletzungen kommen kann als in dem unmittelbar benachbarten Bereich der Fronthaube. Bei der Erfindung ist nunmehr vorgesehen, dass die Kotflügelbank gegenüber der oberen Kotflügelkante abgesenkt angeordnet ist und der Zwischenraum von nachgiebig gestalteten Deformationskonsolen ausgefüllt wird.

Die Deformationskonsolen sind gemäß den Merkmalen des Patentanspruchs 2 in ihrer Erstreckung zwischen den Kotflügeln und den Kotflügelbänken wenigstens einmal abgewinkelt. Vorzugsweise sind die Deformationskonsolen mit mehreren Abwinklungen versehen. Insbesondere kann die Deformationskonsole zumindest abschnittsweise Z-förmig konfiguriert sein (Patentanspruch 3). Durch die mehrfachen Abwinklungen können die Deformationskonsolen gezielt gestaucht werden, wobei die Abwinklungen als Sollbiegestellen fungieren, die bei Überschreiten einer bestimmten Mindestkraft nachgiebig sind und zu einer gerichteten Deformation dieser Bauteile führen.

Eine besonders vorteilhafte Ausgestaltung des Erfindungsgedankens wird in den Merkmalen des Patentanspruchs 4 gesehen. Danach weisen die Kotflügel jeweils eine von der Kotflügelaußenhaut in Richtung zu den Kotflügelbänken an einer oberen Kotflügelkante abgewinkelte Stützwand auf, wobei die Stützwand sich gegenüber einer die obere Kotflügelkante schneidenden Horizontalen um einen Winkel kleiner als 90° abgewinkelt ist. Eine Abwinklung kleiner als 90° trägt dazu bei, dass die in der Regel vertikal verlaufende von der oberen Kotflügelkante nach unten weisende Stützwand deutlich nachgiebiger gegen von oben angreifenden Kräften ist. Die Neigung der Stützwand um einen Winkel kleiner als 90° ermöglicht ein Ausweichen der Stützwand und damit der oberen Kotflügelkante nach außen, das heißt von der Fronthaube und dem Antriebsaggregat weg. Diese Ausweichbewegung führt zu einer Deformation des Kotflügels, ohne dass die obere Kotflügelkante selbst ein ausgeprägt starres Hindernis darstellt. Die Kräfte, die zur Verformung der oberen Kotflügelkante bzw. der Stützwand führen, können auch über die Fronthaube in die Stützwand eingeleitet werden. Das heißt, auch bei einer Kollision mit der Fronthaube wird die Verletzungsschwere durch Aufnahme der Aufprallenergie in den Kotflügelkanten reduziert.

Nach Patentanspruch 5 kann der Winkel kleiner oder gleich 60° sein. Der Übergang zwischen der oberen Kotflügelkante und der Stützwand kann selbstverständlich fließend sein, ebenso wie der Verlauf der Stützwand, die in der Regel in eine Auflagerleiste übergeht, die dann wiederum an den Deformationskonsolen befestigt ist.

Nach den Merkmalen des Patentanspruchs 6 ist das Haubenschloss auf einem Deformationssockel gelagert. Der Deformationssockel besitzt nach den Merkmalen des Patentanspruchs 7 einen im Querschnitt U-förmig konfigurierten Stützkörper mit zwei über einen Quersteg miteinander verbundenen Schenkeln. U-förmig bedeutet in diesem Zusammenhang, dass die Schenkel nicht notwendigerweise im 90° Winkel am Quersteg angeordnet sein müssen. Es ist auch denkbar, dass dieser zwischen Quersteg und Schenkel gemessene Winkel größer oder kleiner als 90° ist, so dass senkrecht zum Quersteg angreifende Kräfte eine Abwinklung der Schenkel gegenüber dem Quersteg bewirken, wobei die in Richtung der Schenkel gemessene Höhe der Stützkörper bei einem Anprall Energie verzehrend verringert wird.

Nach den Merkmalen des Patentanspruchs 8 sind die Schenkel mit Aussparungen versehen, wobei zwischen den Aussparungen Stege verbleiben, die als Sollknickstellen konfiguriert sind. Die Aussparungen dienen zur Schwächung der Schenkel mit dem Ziel, dass die Stege bei Überschreiten einer vorbestimmten Kraft gezielt einknicken und damit unter Verformungsenergie ein Absenken der Fronthaube im Bereich des Haubenschlosses ermöglichen.

Gegenstand des Patentanspruchs 9 ist eine Ausführungsform, bei welcher die Schenkel an ihren dem Quersteg abgewandten Enden mit gegenüber den Schenkeln abgewinkelten Flanschen versehen sind. Die Flansche dienen gewissermaßen als Auflagerflächen, auf denen das Haubenschloss angeordnet sein kann. Mit der Ausführungsform des Patentanspruchs 10 sind die Stützkörper im Querschnitt trapezförmig konfiguriert, wobei die Trapezform sowohl durch einander zugewandte Schenkel als auch durch voneinander abgewandte Schenkel realisiert sein kann, je nachdem, welches Verformungsverhalten des Deformationssockels bzw. des Stützkörpers gewünscht ist.

Im Rahmen des Patentanspruchs 11 ist vorgesehen, dass der Quersteg der Karosserie zugewandt und das Haubenschloss auf den Flanschen abgestützt zwischen die Schenkel eines Stützkörpers oder die Schenkel einander benachbarter Stützkörper greift. Bei dieser Konfiguration wird der zwischen den Schenkeln vorhandene Bauraum zur Eingliederung mindestens eines Abschnitts des Haubenschlosses genutzt, so dass sich die gesamte Bauhöhe des Haubenschlosses nicht wesentlich über die Stützkörper hinaus erstreckt bzw. durch die Stützkörper erhöht. Das Haubenschloss kann sowohl zwischen den Schenkeln eines einzigen Stützkörpers oder auch zwischen die einander benachbarten Schenkel zweier Stützkörper greifen.

Selbstverständlich ist auch die umgekehrte Konfiguration möglich, nach der die Flansche an der Karosserie abgestützt sind und der Quersteg dem Haubenschloss zugewandt ist. Auch bei dieser Konfiguration kann ein Haubenschloss zwischen die Schenkel einander benachbarter Stützkörper greifen (Patentanspruch 12).

Die Stützkörper sind gemäß den Merkmalen des Patentanspruchs 13 vorzugsweise aus Metall gefertigt.

Die Erfindung wird nachfolgend anhand eines in schematischen Zeichnungen dargestellten Ausführungsbeispiels näher erläutert. Es zeigen:
- Figur 1: eine Prinzipskizze eines Vertikalschnitts durch einen Kotflügel mit angrenzender Fronthaube und Antriebsaggregat;
- Figur 2: eine mögliche Ausführung einer Deformationskonsole im Vertikalschnitt;
- Figur 3: einen Vertikalschnitt durch ein unterhalb einer Fronthaube angeordnetes Haubenschloss in einer ersten Ausführungsform;
- Figur 4: eine zweite Ausführungsform eines Haubenschlosses in der Querschnittsdarstellung;
- Figur 5: ein unterhalb einer Fronthaube angeordnetes Deformationselement und
- Figur 6: eine perspektivische Ansicht eines Teilbereichs eines Stützkörpers.

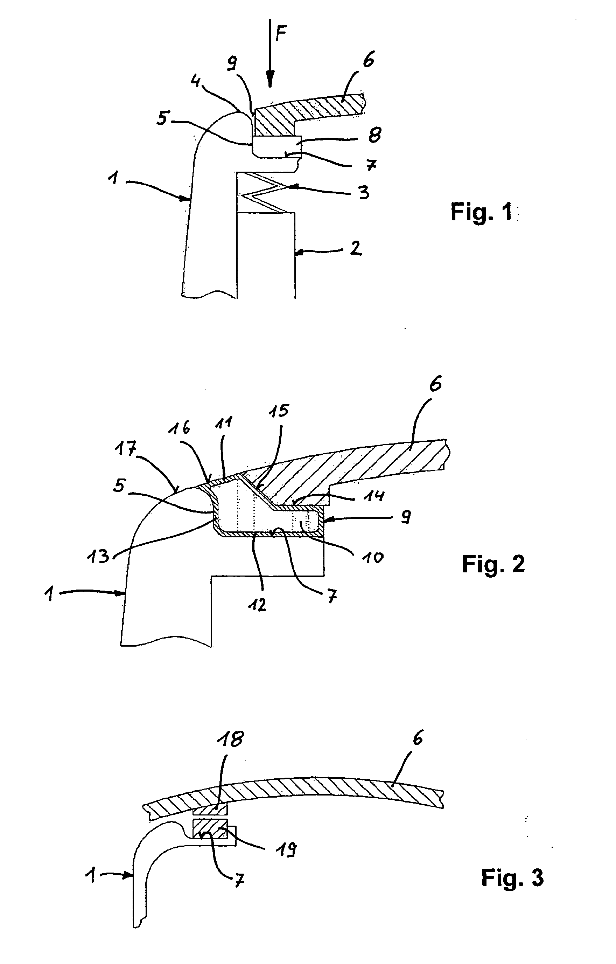

Figur 1 zeigt einen Kotflügel 1, der an einer schematisch angedeuteten Deformationskonsole 2 gelagert ist. Der Kotflügel 1 nimmt in einem Radhaus 3 einen Reifen 4 auf. Die Kotflügelaußenhaut 5 ist gewölbt und erstreckt sich von dem Radhaus 3 ausgehend nach oben in Richtung zu ihrer oberen Kotflügelkante 6. Hieran schließt sich unter Ausbildung eines Spalts eine Fronthaube 7 an, die ein Antriebsaggregat 8 des nicht näher dargestellten Personenkraftwagens bedeckt.

Der Kotflügel 1 besitzt in seinem weiteren Verlauf im Anschluss an die Kotflügelkante 6 eine gegenüber der oberen Kotflügelkante 6 abgewinkelte Stützwand 9, die in Richtung zur Deformationskonsole 2 weist. Die Stützwand 9 ist gegenüber der Horizonalen H um einen Winkel W kleiner 90° abgewinkelt. In diesem Ausführungsbeispiel ist der Übergang zwischen der Stützwand 9 und der Kotflügelaußenhaut 5 im Bereich der oberen Kotflügelkante 6 fließend. Ebenso ist ein Übergangsbereich zu einer Auflagerleiste 10 des Kotflügels 1 gerundet ausgeführt. Die Auflagerleiste 10 liegt auf der Deformationskonsole 2 auf. Über die Auflagerleiste 10 ist der Kotflügel 1 mit der Deformationskonsole 2 und damit mit der nicht näher dargestellten Kotflügelbank verbunden.

In diesem Ausführungsbeispiel ist erkennbar, dass jede an den gerundeten Verlauf der Stützwand 9 anliegende Tangente die Horizontale in einem Winkel W kleiner 90° schneidet. Der Winkel W variiert über die Höhe der Stützwand. Er liegt im Durchschnitt etwa bei 60°.

An der Darstellung der Figur 1 wird ferner deutlich, dass die obere Kotflügelkante 6 bei einer Krafteinleitung in Richtung des Pfeils F sowohl nach unten abgesenkt werden kann, gleichzeitig aber auch nach außen in Richtung zur Kotflügelaußenhaut 5 verformt werden kann. Die Bemessung der Verformungswege hängt im wesentlichen von der Dimensionierung der Deformationskonsole 2 sowie von der Ausgestaltung der Stützwand 10 ab.

In Figur 2 ist eine mögliche Ausgestaltung der Deformationskonsole 2 dargestellt. In diesem Ausführungsbeispiel besitzt die Deformationskonsole 2 im Querschnitt die Form des Buchstaben Z. Dabei liegt ein oberer Horizontalschenkel 11 am Kotflügel 1 an, während ein unterer Horizontalschenkel 12 auf der nicht näher dargestellten Kotflügelbank abgestützt ist. Ein die beiden Horizontalschenkel 11, 12 verbindender Diagonalschenkel 13 bildet im Übergangsbereich zu den Horizontalschenkeln 11, 12 Sollbiegestellen 14, 15 aus, die eine Stauchung der Deformationskonsole 2 ermöglichen. Die Stauchung kann insbesondere auch durch Einleitung einer Anprallkraft über die Fronthaube 7 erfolgen, die zu diesem Zweck an ihrer Längskante eine nach unten in Richtung zur Deformationskonsole 2 weisende Abwinklung 16 aufweisen kann. Diese Abwinklung 16 kann die angreifende Kraft F über die Auflagerleiste 10 gezielt in die Deformationskonsole 2 einleiten.

Figur 3 zeigt eine mögliche Ausgestaltung eines Haubenschlosses 17 unterhalb einer Fronthaube 7. Das Haubenschloss 17 ist auf einem Deformationssockel 18 gelagert, welcher zwei im Querschnitt trapezförmige Stützkörper 19 umfasst. Die Stützkörper 19 besitzen jeweils zwei Schenkel 20, 21, die über einen Quersteg 22 miteinander verbunden sind. Die Stützkörper 19 sind in Richtung zur Fronthaube 7 mündungsseitig offen. Die Stützkörper 19 besitzen an ihren offenen Enden gegenüber den Schenkeln 20, 21 abgewinkelte Flansche 23.

Bei dieser Ausführungsform greift das Haubenschloss 17 mit seinem unteren Ende zwischen die einander benachbart angeordneten Stützkörper 22. Das Haubenschloss 17 weist an seinem unteren Ende eine Federanordnung 24 auf, die ein Absenken der Fronthaube 7 gegen eine aus der Federanordnung 24 resultierende Federkraft ermöglicht. Erst wenn die Federkraft der Federanordnung 24 überwunden ist, das heißt der elastische Bereich verlassen wird, kommt es zu einer Verformung des Deformationssockels 18. Die besondere Gestaltung des Deformationssockels 18 bzw. der Stützkörper 19 ermöglicht eine Ausweichbewegung des Haubenschlosses 17 und damit der Fronthaube 7 sowohl in Richtung des Kraftvektors F1, das heißt bei groben angreifenden Kräften, als auch in Richtung des Kraftvektors F2, das heißt bei von vorne angreifenden Kollisionskräften.

Zusätzlich ist eine Sollbruchstelle 25 zwischen einer vorderen Kante 26 der Fronthaube 7 und einer Oberkante 27 eines schematisch angedeuteten Scheinwerfers 28 vorgesehen. Die Sollbruchstelle 25 kann beispielsweise aus einem elastischen Material bestehen, das insbesondere bei von oben angreifenden Kräften eine Verlagerung der Fronthaube nach unten ermöglicht, ohne dabei zu einer Zerstörung des Scheinwerfers 28 zu führen. Andererseits dient die Sollbruchstelle 28 dazu, den relativ unnachgiebigen Scheinwerfer 28 anprallweich gegenüber der Fronthaube 7 zu lagern, ohne dass der Scheinwerfer 28 bei einer Kollision ein besonders starres Hindernis darstellt.

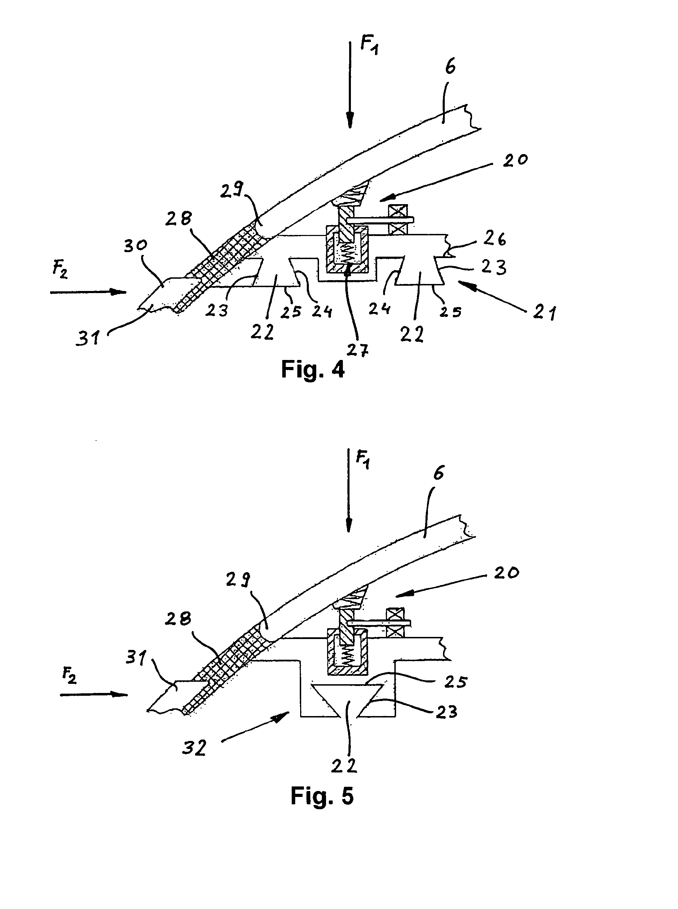

Die Ausführungsform der Figur 4 unterscheidet sich von derjenigen der Figur 3 dadurch, dass der dort verwendete Deformationssockel 29 nur einen einzigen Stützkörper 19 aufweist, der zudem in Richtung des nicht näher dargestellten Chassis bzw. der Kraftfahrzeugkarosserie nach unten hin offen ist. Das heißt, der Stützkörper 19 ist gewissermaßen umgekehrt gegenüber der vorherigen Ausführungsform angeordnet, wobei der Quersteg 22 nunmehr dem Haubenschloss 17 zugewandt ist. Auch bei dieser Konfiguration ein Ausweichen des Haubenschlosses 17 und damit der Fronthaube 7 bei Anprallkräften aus den Richtungen der Kraftvektoren F1 und F2 möglich.

Figur 5 zeigt einen unterhalb einer andeutungsweise eingezeichneten Fronthaube angeordneten Deformationskörper 30. Der Deformationskörper 30 ist aus der unterseitigen Tragstruktur 31 der Fronthaube 7 ausgestellt und weist in Richtung eines nicht näher dargestellten Antriebsaggregats. Der Deformationskörper 30 besteht ebenso wie die Tragstruktur 31 aus Metall. Er umfasst Federschenkel 32 und ein endseitig des unteren Federschenkels 32 angeordnetes Federblech 33, das bei diesem Ausführungsbeispiel parallel zur Tragstruktur 31 verläuft.

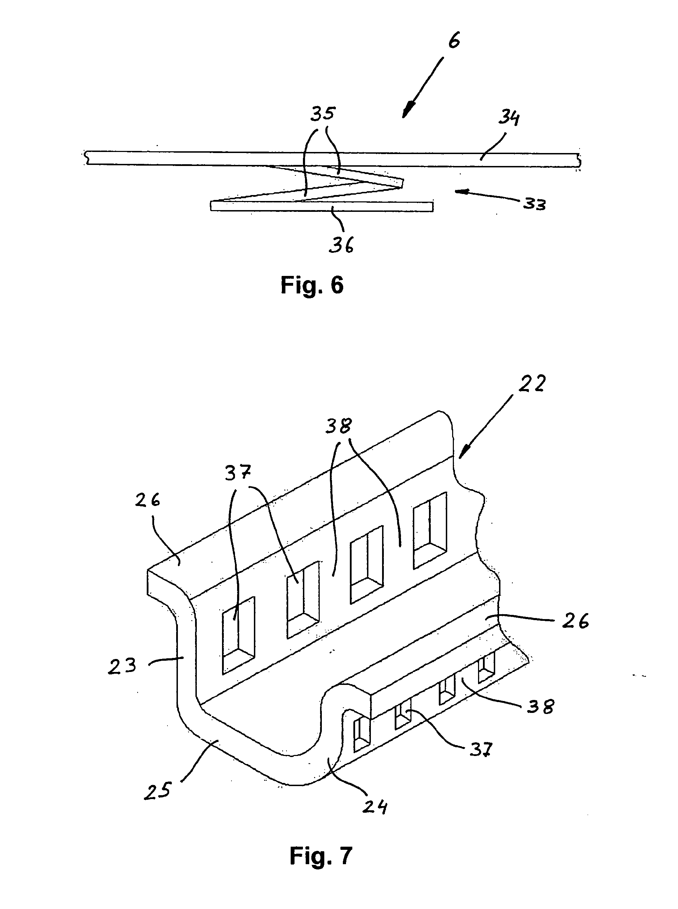

Figur 6 zeigt eine mögliche Ausführungsform eines Stützkörpers 19. Der Stützkörper 19 besitzt in seinen Schenkeln 20, 21 Aussparungen 34. Die Aussparungen 34 sind rechteckig konfiguriert und in gleichmäßigen Abständen zueinander angeordnet. Zwischen den Aussparungen 34 verbleiben Stege 35, die als Sollknickstellen konfiguriert sind und bei von oben und/oder von der Seite angreifenden Kräften eine Verformung der Schenkel 23, 24 und damit des Stützkörpers 21 ermöglichen.

### Bezugszeichenaufstellung

- 1 -: Kotflügel
- 2 -: Deformationskonsole
- 3 -: Radhaus
- 4 -: Reifen
- 5 -: Kotflügelaußenhaut
- 6 -: obere Kotflügelkante v. 1
- 7 -: Fronthaube
- 8 -: Antriebsaggregat
- 9 -: Stützwand v. 1
- 10 -: Auflagerleiste v. 1
- 11 -: Horizontalschenkel v. 2
- 12 -: Horizontalschenkel v. 2
- 13 -: Diagonalschenkel
- 14 -: Sollbiegestelle zw. 11, 13
- 15 -: Sollbiegestelle zw. 12, 13
- 16 -: Abwinklung an 7
- 17 -: Haubenschloss
- 18 -: Deformationssockel
- 19 -: Stützkörper v. 18
- 20 -: Schenkel v. 19
- 21 -: Schenkel v. 19
- 22 -: Quersteg v. 19
- 23 -: Flansche an 20, 21
- 24 -: Federanordnung v. 17
- 25 -: Sollbruchstelle
- 26 -: vordere Kante v. 7
- 27 -: Oberkante v.7
- 28 -: Scheinwerfer
- 29 -: Deformationssockel
- 30 -: Deformationskörper
- 31 -: Tragstruktur
- 32 -: Federschenkel v. 30
- 33 -: Federblech v. 30
- 34 -: Aussparung in 20, 21
- 35 -: Steg

- F -: Kraft
- F1 -: Kraftvektor
- F2 -: Kraftvektor
- H -: Horizontale
- W -: Winkel

## Patentansprüche

1. Personenkraftwagen mit gegenüber von oben und/oder vorne durch einen Aufprall eines ungeschützten Verkehrsteilnehmers einwirkenden Kräften nachgiebig gestalteten Karosseriefrontteilen (1, 7) mit folgenden Merkmalen:
- eine Fronthaube (7) weist an ihrer Unterseite einem Antriebsaggregat zugewandte Deformationskörper (30) auf;
- die Fronthaube (7) ist über ein an einer Karosserie angeordnetes Haubenschloss (17) verriegelbar, welches gegenüber von der Fronthaube (7) ausgehenden Anprallkräften nachgiebig gestaltet und/oder gelagert ist;
- die Fronthaube (7) ist mit Scharniergelenken an der Karosserie gelagert, wobei die Scharniergelenke gegenüber von der Fronthaube (7) ausgehenden Anprallkräften nachgiebig gestaltet und/oder gelagert sind;
- die Fronthaube (7) ist an seitlichen Kotflügeln (1) abgestützt, wobei die Kotflügel (1) im Bereich ihrer oberen Kotflügelkanten (6) über Deformationskonsolen (2) an den Kotflügelbänken abgestützt sind.

2. Personenkraftwagen nach Anspruch 1, **dadurch gekennzeichnet, dass** die Deformationskonsolen (2) in Ihrer Erstreckung zwischen den Kotflügeln (1) und den Kotflügelbänken wenigstens eine Abwinkelung (14, 15) aufweisen.

3. Personenkraftwagen nach Anspruch 2, **dadurch gekennzeichnet, dass** die Deformationskonsolen (2) zumindest abschnittsweise Z-förmig konfiguriert sind.

4. Personenkraftwagen nach einem der Ansprüche 1 bis 3, **dadurch gekennzeichnet, dass** die Kotflügel (1) jeweils eine von der Kotflügelaußenhaut (5) in Richtung zu den Kotflügelbänken an einer oberen Kotflügelkante (6) abgewinkelte Stützwand (9) aufweisen, wobei die Stützwand (9) gegenüber einer Horizontalen (H) um einen Winkel (W) kleiner als 90° abgewinkelt ist.

5. Personenkraftwagen nach Ansruch 4, **dadurch gekennzeichnet, dass** der Winkel (W) kleiner oder gleich 60° ist.

6. Personenkraftwagen nach einem der Ansprüche 1 bis 5, **dadurch gekennzeichnet, dass** das Haubenschloss (17) auf einem Deformationssockel (18) gelagert ist.

7. Personenkraftwagen nach Anspruch 6, **dadurch gekennzeichnet, dass** der Deformationssockel (18) einen im Querschnitt U-förmig konfigurierten Stützkörper (19) mit zwei über einen Quersteg (22) miteinander verbundenen Schenkeln (21, 22) aufweist.

8. Personenkraftwagen nach Anspruch 7, **dadurch gekennzeichnet, dass** die Schenkel (21, 22) mit Aussparungen (34) versehen sind, wobei zwischen den Aussparungen (34) verbleibende Stege (35) als Sollknickstellen konfiguriert sind.

9. Personenkraftwagen nach Anspruch 7 oder 8, **dadurch gekennzeichnet, dass** die Schenkel (21, 22) an ihren dem Quersteg (22) abgewandten Enden mit gegenüber den Schenkeln (20, 21) abgewinkelten Flanschen (23) versehen sind.

10. Personenkraftwagen nach einem der Ansprüche 7 bis 9, **dadurch gekennzeichnet, dass** die Stützkörper (19) im Querschnitt trapezförmig konfiguriert sind.

11. Personenkraftwagen nach Anspruch 9 oder 10, **dadurch gekennzeichnet, dass** der Quersteg (22) der Karosserie zugewandt und das Haubenschloss (20) auf den Flanschen (23) abgestützt zwischen die Schenkel (20, 21) eines Stützkörpers (19) oder die Schenkel (23, 24) einander benachbarter Stützkörper (19) greift.

12. Personenkraftwagen nach Anspruche 9 oder 10, **dadurch gekennzeichnet, dass** die Flansche (23) an der Karosserie abgestützt sind und der Quersteg (22) dem Haubenschloss (17) zugewandt ist.

13. Personenkraftwagen nach einem der Ansprüche 1 bis 12, **dadurch gekennzeichnet, dass** die Stützkörper (19) aus Metall gefertigt sind.
